# EUROPEAN PATENT APPLICATION

(11) **EP 1 088 685 A2**
(43) Date of publication of application: **04.04.2001**
(21) Application number: 00660170.2
(22) Date of filing: 28.09.2000
(51) Int. Cl.: B60C 11/12, B60C 11/16, B60C 11/11

(54) **Winter tyre for vehicle, particularly a traction winter tyre for heavy trucks**

(30) Priority: 29.09.1999 FI 992096
(71) Applicant: Nokian Tyres PLC., 37101 Nokia (FI)
(72) Inventor: Siltanen, Teppo, 37140 Nokia (FI)
(74) Representative: Lassenius, Birgitta Maria

(57) **Abstract**

The present invention relates to a winter tyre of a vehicle, the tread (1) whereof being provided with tread elements (11) and mainly circumferential (a-e) grooves separating same from each other, and grooves transverse (j-o) relative thereto, the tread element rows (A-F) between said circumferential grooves being displaced relative to each other so that the tread elements adjacent in axial direction to the tyre are overlapping, and said tread elements being provided with capillary grooves (8a, 9a) opening to the tread and into the tyre with the purpose of increasing the grip of the tread with the road surface. The winter tyre is characterized in that adjacent tread elements overlappingly adjacent in axial direction to the tyre are connected in pairs with each other into double tread elements (2) with a bridge part (3) connecting one end of a lateral edge (4) adjacent to one tread element and the opposite end of a lateral edge (5) adjacent to another tread element (2b) to form a bridge zone, and the wing parts (6a, 6b) formed from the connected tread elements (2a, 2b) extend therefrom in opposite directions, that the length of the bridge part (3), viewed in axial direction to the tyre, is equivalent to the width of the groove (c) between the connected double tread elements (2a, 2b), that the bridge zone is provided with a long capillary groove (7) extending from one circumferential outer edge thereof to the opposite outer edge thereof, that the long capillary groove (7) is discontinued from the area (13) ambient to the anti-skid stud (12), if an anti-skid stud with the support area is arranged in the area of the long capillary groove.

## Description

The present invention concerns a winter tyre for a vehicle, particularly a traction winter tyre for heavy trucks, the tread of which is provided with tread elements and with mainly circumferential grooves separating said elements from each other and those in transverse direction thereto, the tread element rows between which circumferential grooves are displaced relative to each other so that the adjacent tread elements in axial direction to the tyre are overlapping, and which tread elements contain capillary grooves opening into the tread and extending into the tyre to increase the grip of the tread with the road surface. The purpose of the capillary grooves provided in the tread elements is to increase the grip of the tyres in winter conditions. In the Nordic countries, so-called snow tyres provided with open patterns have been used for improving the grip of the tyres in winter conditions, the surface-groove ratio whereof being small compared with ordinary traction tyres.

A drawback related to said snow tyres lies in that the degree of capillary grooving of the tread cannot be substantially increased without increasing the surface-groove ratio or without reducing the groove depth, both of which decrease the driving properties in snow conditions. If the degree of capillary grooving is increased by maintaining the surface -groove ratio and the groove depth, the stability of the tyre will be impaired and its wear resistance will be degraded.

The objective of the present invention is to increase the degree of capillary grooving without altering the openness of the tread pattern and its groove depth.

The aim has been successfully achieved by means of a winter tyre of the invention, the principal characteristic features of which become obvious in the characteristics of claim 1. The invention is based on the feature that the tread elements are joined in pairs mainly by an axial bridge part of the tyre so that a double tread element is formed comprising mainly an axial bridge zone and the ends of the tread element, that is, wing parts, included therein and combining both. In a double tread element of such configuration, at least one capillary groove of the length of the bridge zone can be formed in the bridge zone, and in addition, at least two capillary grooves of the length of one tread element in the wing parts of the double tread element.

By means of the truck winter tyre of the invention, provided with a double tread element, an improved grip can be achieved on an icy and snowy road, that is, in conditions of packed slippery snow, while the wear resistance of the tyre is excellent and the shape of the wear is uniform.

The tyre of the invention works excellently without anti-skid studs, though studs may also be attached thereon. The patterning of the tyre enables an appropriate distribution of studs. An intact cylindrical support area of a tread element is provided around a stud. A capillary-groove entering the support area is discontinued on that spot, whereby a lamella needed to form an intact capillary groove is replaced by lamella parts forming a discontinued capillary groove.

The tread of the tyre of the invention may comprise a variable number of tread element rows, the tread elements adjacent in pairs of which are connected into double tread elements. A winter traction tyre of a conventional-sized heavy truck is preferably provided with six rows of relatively small-sized tread elements, whereby three overlapping adjacent double tread elements are formed, or respectively, two double tread elements and two tread elements apart, i.e. unbound, in shoulder areas.

If a tyre includes an odd number of tread element rows, for instance five or seven, adjacent double tread elements and one single tread element are respectively left overlapping in each axial row, alternately in one shoulder area and alternately in another area. As regards the degree of capillary grooving this does not bear any significance.

The tread elements of the shoulder areas and those single ones and the tread elements of the double tread elements towards the shoulder area are advantageously rectangular tread elements, the circumferential edges of which are parallel to the direction of rotation and the transversal edges of which are in axial direction to the tyre. The tread elements of the middle area of the tread form advantagoeusly a small angle with the tyre axle so that the transversal edges thereof form an about 0 to 10° angle, preferably about 7°, to the axle, while the circumferential edges are parallel to the direction of rotation.

A double tread element comprises preferably four short capillary grooves, that is, extending across each wing part of the tread element, and one long capillary groove, extending across the bridge zone and, therefore, being longer by the length of the bridge part than the two short capillary grooves altogether. The inner capillary grooves of the wing parts are preferably positioned in the immediate proximity of the bridge zone. For reasons of manufacturing a tread element, the side edges are curved inwards, which aids embedding inner lamellae in the mould.

Since the spaces between the capillary grooves in a double tread element are advantageously mutually equal and since the inner capillary grooves of the wing parts are located in the immediate proximity of the bridge zone, two capillary groove spaces form the width of the bridge part.

The tyre of the invention and the tread thereof are manufactured in a manner obvious to a person skilled in the state of art. The capillary grooves are achieved with lamellae of the shape corresponding to the shape of the capillary grooves, which are embedded in the mould.

The winter tyre of the invention and the lamella used for manufacturing same are described below by an embodiment, reference being made to the accompanying figures, in which
- Figure 1: presents the tread of a winter tyre of the invention is top view;
- Figure 2: presents approximately in one-to-one size a lamella used for producing the winter tyre of the invention for making a capillary groove in a bridge zone, in top view and as intended when embedded in rubber mass;
- Figure 3: presents the lamella of Figure 2 in vertical image prior to being crinkled and with the edge forming the tread turned up;
- Figure 4: presents approximately in one-to-one size a lamella used for producing the winter tyre of the invention for forming a capillary groove of the wing part of a double tread element, in top view and as intended when embedded in rubber mass;
- Figure 5: presents lamella of Figure 4 in vertical image prior to being crinkled and what it would be like when disposed in a wing part in the middle of the tread, and
- Figure 6: presents lamella of Figure 4 in vertical view prior to being crinkled and what it would be like when disposed in a wing part located in a shoulder part of the tread.

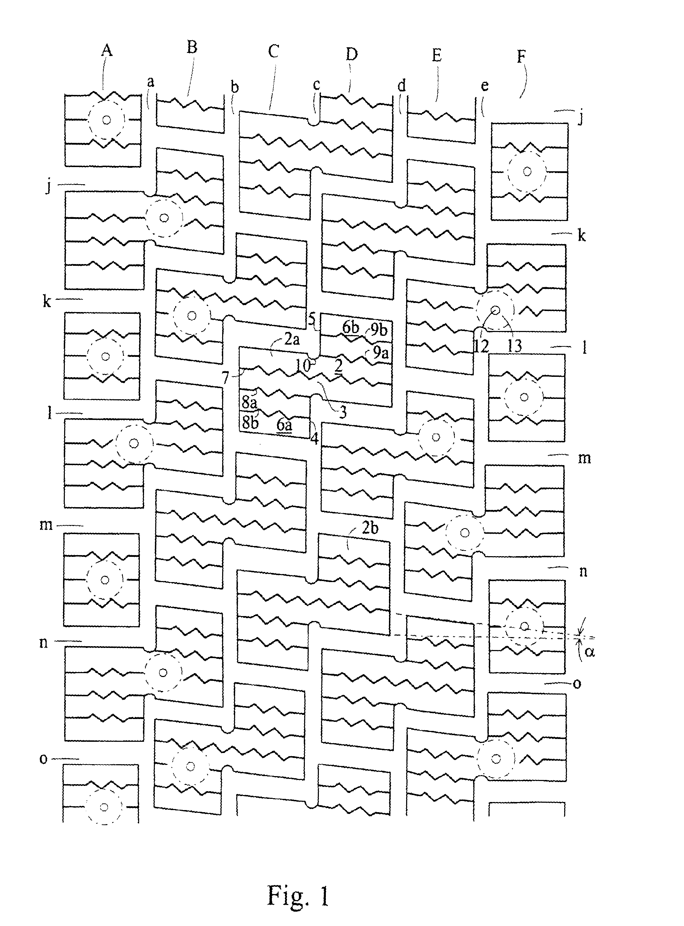

Figure 1 presents the tread 1 of a traction wheel for a heavy truck. The vertical direction of the figure is the same as the circumferential direction of the tyre and the horizontal direction of the figure is the same as the axial direction of the tyre. The tread is provided with six circumferential tread element rows A-F, each outermost row A and F of which are located in the shoulder area of the tyre. Between the circumferential tread element rows A-F, circumferential grooves a-e are located. The adjacent tread elements, such as 2a and 2b, of two adjacent tread element rows, such as C and D, are connected into a double tread element 2. The connection is carried out by means of a bridge part 3, which connects the upper part of one internal edge 4 of adjacent tread elements 2a and 2b and the lower part of another internal edge 5. The length of the bridge part 3 is equivalent to the width of a circumferential groove c between the tread elements 2a and 2b to be connected. The bridge zone of the double tread element 2 thus formed comprises the upper part of the one tread element 2a and the lower part of the other tread element 2b and the bridge part 3. The free parts of the tread elements 2a and 2b protrude from the bridge zone and form wing parts 6a and 6b in opposite directions.

There is room in the bridge zone for a capillary groove 7 extending across the entire zone, said groove being longer by the length of the bridge part 3 than the width of the tread elements 2a, 2b. Each of the wing parts 6a and 6b of the double tread element 2 is provided with two capillary grooves 8a, 9a and 8b, 9b, the inner capillary grooves 8a and 9a whereof being located in the immediate proximity of the bridge zone 3. As is known in the art, the capillary grooves extend from one edge of a tread element to the other and open into adjacent grooves a-e. Most advantageously, the capillary grooves are mutually parallel and concurrent as the edges of the tread element in axial direction to the tyre. The capillary grooves 7, 8a, 8b, 9a and 9b of the double tread element 2 are located on the same distance from each other and preferably also on the same distance from the edges of the tread element in axial direction.

In the double tread element 2 thus formed, the degree of capillary grooving has been increased successfully while the surface - groove ratio, that is, the surface of tread elements in proportion to the circumferential grooves therearound and to the grooves cross-sectional thereto is mainly unchanged. The distribution of capillary grooves in the tread element is advantageous and makes the tread stable.

The edges 10 of the bridge part 3 are inwards curved. This facilitates the embedding of lamellae used for forming inner capillary grooves 8a and 9a in the mould.

Owing to the configuration of a double tread element 2, being primarily of the shape of double L, the tread elements adjacent in axial direction to the tyre are overlapping to each other, and the axial grooves j-o of the tread are stepped in shape. The double tread elements 2 are in axial direction preferably at a space from each other which corresponds to the space between the capillary grooves. A regularly recurrent pattern is formed in this manner in the tread of the tyre.

In the shoulder areas of the tyre, areas A and F, are provided alternately with a tread element 2a of the double tread element 2 in the direction to the shoulder area, respectively 2b, and alternately, a single, i.e. an unbound tread element 11. All tread elements of the shoulder areas A and F, both the bound tread elements 2a and the unbound tread elements 11 are preferably rectilinear in shape. All double tread elements of the middle area B-E of the tread are diamond-shaped so that the axial edges form a small angle α to the circumferential edges. The angle α is of the order 0°-7°, preferably 6°-7°. A minor slantedness causes noise suppression to the noise being generated.

The tread as in Figure 1 is provided with anti-skid studs 12, being spread in the shoulder area A and F and in adjacent tread element rows B and E. The spreading of anti-skid studs is a positive solution and will guarantee their efficient operation and uniform wear. A stud is surrounded by an intact part of the tread element, a cylindrical support area 13. The capillary grooves may not extend to the support area 13. Therefore, all lamellae, the capillary grooves provided by which would extend to the support areas of the anti-skid studs, are discontinued so that they do not extend beyond the border of the support area.

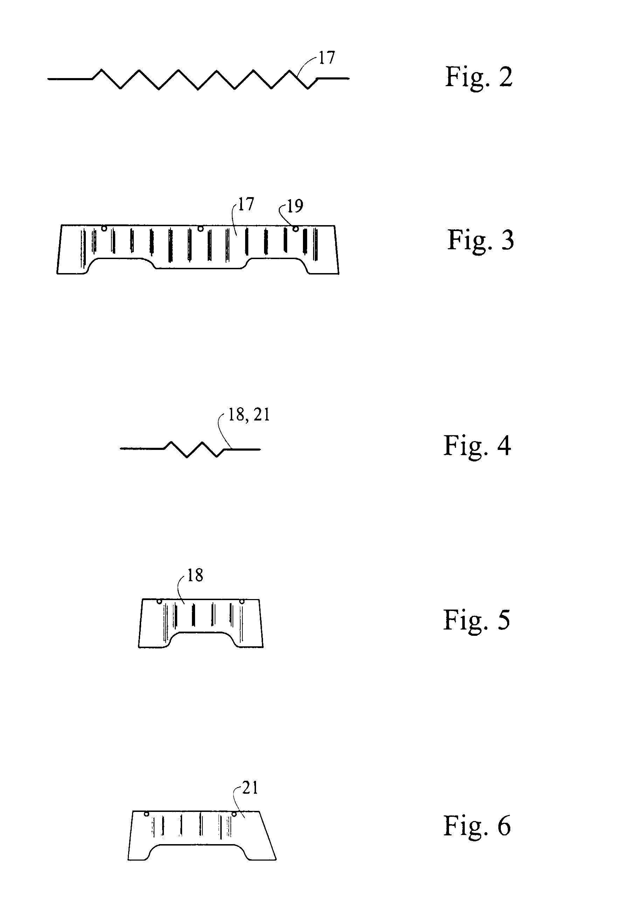

In Figure 2, a lamella 17 is presented for forming a capillary groove 7 extending across the bridge zone. The capillary groove shape is shown in the figure which the lamella 17 forms in the tread. The straight edge of the lamella, being here spread to be planar, forms a groove 7 visible in the tread. The serratedness of the opposite edge makes the tread element solid. The holes 19 in the upper edge are venting holes.

Figure 4 presents a lamella 18, 21 used for forming capillary grooves of the unbound tread elements 11 and of the wing parts 2a, 2b of double tread elements. The capillary groove is shown to be identical in shape in said parts of the tread. The lamella 18, 21 is, however, formed in the manner determined by the location, as shown in Figures 5 and 6. The lamella 18 as in Figure 5 is used for forming capillary grooves of wing parts 2a, 2b of the middle area of the tread and the lamella 21 of Figure 6 for forming capillary grooves of the unbound tread elements 11 of the shoulder area and of the bound tread elements 22a. The manufacturing of lamellae, tyre moulds and tyres in moulds conforms to the conventional technology.

The embodiment displayed illustrates a six-row tyre. It is obvious that the number of tread elements can be varied and, however, maintain the idea of the invention. The dimensions of a tyre define primarily the number of tread element rows. Also the number, shape and mutual location of capillary grooves can be varied within the scope of Claim 1.

The tyres of the invention are intended for use as traction wheels in heavy trucks, but it is obvious that they may also be used for less demanding needs. When worn out, they are useful for instance in summer driving.

## Claims

1. A winter tyre for a vehicle, the tread (1) whereof being provided with tread elements (11) and mainly circumferential (a-e) grooves separating same from each other, and grooves tranverse (j-o) thereto, the rows of tread elements (A-F) between which circumferential grooves are displaced relative to each other so that the tread elements adjacent in axial direction to the tyre are overlapping, and which tread elements comprise capillary grooves (8b, 9b) opening to the tread and extending into the tyre for enhancing the grip of the tread with the road surface, **characterized in** that the adjacent tread elements overlapping in axial direction to the tyre are connected in pairs into double tread elements (2) by a bridge part (3) connecting one end of a lateral edge (4) adjacent to one tread element (2a) and the opposite end of a lateral edge (5) adjacent to another tread element (2b) to form a bridge zone, and the wing parts (6a, 6b) formed from the connected tread elements (2a, 2b) extend therefrom in opposite directions, that the length of the wing part (3) viewed in axial direction to the tyre is equivalent to the width of the groove (c) between the double tread elements (2a, 2b) thus connected, that the bridge zone comprises a long capillary groove (7) extending from one circumferential outer edge thereof to the opposite outer edge thereof, that the long capillary groove (7) is discontinued from the area (13) ambient to an anti-skid stud (12) if the anti-skid stud and its support area in the tread element are embedded in the area of a long capillary groove.

2. Winter tyre according to claim 1, **characterized in that** both wing parts (6a, 6b) of a double tread element (2) are provided with capillary grooves (8a, 8b, 9a, 9b) which are preferably parallel to the long capillary groove (7).

3. Winter tyre according to claim 1 or 2, **characterized in** that both wing parts (6a, 6b) of a double tread element (2) are provided with capillary grooves (8a, 8b, 9a, 9b) which extend from one outer edge of a wing part to its opposite outer edge.

4. Winter tyre according to any one of the preceding claims, **characterized in** that both of the wing parts (6a, 6b) of the double tread element (2) are provided with capillary grooves (8a, 8b, 9a, 9b) and that the space between all adjacent capillary grooves is equal.

5. Winter tyre according to any one of the preceding claims, **characterized in** that the innermost capillary groove (8a, 9a) of both wing parts (6a, 6b) of the double tread element (2) is located in the immediate proximity of a bridge zone.

6. Winter tyre according to any one of the preceding claims, **characterized in** that the outer edges (10) of the bridge part (3) are inwards curved.

7. Winter tyre according to any one of the preceding claims, **characterized in** that the double tread element (2) is symmetrical relative to the longitudinal centreline of the bridge zone, with the exception of the anti-skid stud (12) and its support area (13), when an anti-skid stud is embedded in the tread element.

8. Winter tyre according to any one of the preceding claims, **characterized in** that the capillary grooves (7, 8a, 8b, 9a, 9b) are mutually identical in shape and that they are straight in the ends when in top view and Z-shaped or undulated in configuration in the portion between the ends.

9. Winter tyre according to any one of the preceding claims, **characterized in** that the capillary grooves (7, 8a, 8b, 9a, 9b) are parallel to each other and to the longitudinal direction of the bridge zone of the double tread elements.

10. Winter tyre according to any one of claims 1 to 8, **characterized in** that the capillary grooves and the parallel edges of the double tread elements form a small angle (α) with the axis of the tyre, the angle being in the range 0° to 10°, preferably about 7°.

11. Winter tyre according to claim 10, **characterized in** that in the shoulder area (A, F) of the tyre, every second tread element is a tread element (22a) of a double tread element and every second, an unbound tread element (11).
